# EUROPEAN PATENT APPLICATION

(11) **EP 2 251 869 A1**
(43) Date of publication of application: **17.11.2010**
(21) Application number: 10005039.2
(22) Date of filing: 12.05.2010
(51) Int. Cl.: G11B 27/034, G11B 27/28, H04H 60/27, H04H 60/63, H04H 60/74

(54) **Preserving the integrity of segments of audio streams**

(30) Priority: 13.05.2009 US 465280
(71) Applicant: Sony Computer Entertainment America LLC, Foster City CA 94404 (US)
(72) Inventor: Murrant, David, Foster City CA 94404 (US)
(74) Representative: Käck, Jürgen

(57) **Abstract**

Methods and systems for preserving the integrity of segments of audio streams are provided. An audio playback device (105) may receive an audio stream from an audio transmission source. The audio stream may include a plurality of segments. The segments may each include a whole or partial song, talk program, commercial, DJ chatter, news or weather report, or the like. The audio stream may be temporarily stored in a buffer that contains a contiguous portion of the audio stream from a preceding time period. The buffer may reside in memory (225) of the audio playback device (105). Indicia of a selection may be received via a user interface (210) of the audio playback device (105). The indicia of the selection may be associated with the segment being currently received from the audio transmission source. The segment associated with the indicia of the selection may be stored in memory (225) of the audio playback device (105).

## Description

### BACKGROUND OF THE INVENTION

### Field of the Invention

The present invention generally relates to streaming audio technology. More specifically, the present invention relates to preserving segments of audio streams.

### Description of the Related Art

Recording audio streams such as broadcasts of radio programs has taken place since the advent of portable cassette tapes. Recording steams of audio in this manner, however, was (and to a lesser extent remains) indiscriminant as both desired and undesired segments of the audio stream are recorded. A desired segment may be a song or talk program, while an undesired segment may include disc jockey (DJ) chatter or a commercial that overlaps with an otherwise desired portion of the song or program.

While systems exist that screen out commercials and DJ chatter from a recorded audio stream, such systems are inaccurate. Use of such a system may result in excessive amounts of recorded material that still include undesired content. Alternatively, such a system may be overly selective and omit portions of desired content. Even a finely tuned system that precisely removes content from the beginning or end of an audio stream, such a system fails to address interruptions that might exist in the middle of the recorded stream.

Such systems also fail to offer any selectivity in the recording. The systems-regardless of their accuracy-record either all of an audio broadcast or none of the segments of a broadcast. As a result, a user will have to manually sort the recorded material for segments that are actually wanted. Even after a user has a set of desired audio segments (*e.g*., audio without DJ chatter), the user will ultimately be left with an incomplete audio stream. Removal of certain segments of chatter may ultimately require the removal of desired musical segments. As a result, a user will have to purchase the entirety of the musical track (*e.g*., a song) and then splice together the missing and acquired segments with the previously recorded and edited segments in an *ad hoc*. There is a need in the art for preserving the integrity of audio streams.

### SUMMARY

Embodiments of the present invention allow a segment of an audio stream to be preserved in response to a selection by a user.

In a first claimed embodiment, a method for preserving a segment of an audio stream is disclosed. An audio playback device may receive an audio stream from an audio transmission source. The audio stream may include a plurality of segments. The segments may each include a whole or partial song, talk program, commercial, DJ chatter, news or weather report, or the like. The audio stream may be temporarily stored in a buffer that contains a contiguous portion of the audio stream from a preceding time period. The buffer may reside in memory of the audio playback device. Indicia of a selection may be received via a user interface of the audio playback device. The indicia of the selection may be associated with the segment being currently received from the audio transmission source. The segment associated with the indicia of the selection may be stored in memory of the audio playback device.

In a second claimed embodiment, a system for preserving a segment of an audio stream is disclosed. The system includes a communications module stored in memory and executable by a processor to receive an audio stream from an audio transmission source. The audio stream may include a plurality of segments. The system also includes a buffering module stored in memory and executable by a processor to temporarily store the audio stream in a buffer that contains a contiguous portion of the audio stream from a preceding time period. The buffer may reside in memory of the audio playback device. Additionally, the system includes a selection module stored in memory and executable by a processor to receive via a user interface of the audio playback device indicia of a selection. The indicia of the selection may be associated with the segment being currently received from the audio transmission source. Furthermore, the system includes a data management module stored in memory and executable by a processor to store the segment associated with the indicia of the selection in memory of the audio playback device.

A third claimed embodiment discloses a computer readable storage medium having a program embodied thereon. The program is executable by a processor to perform method for preserving a segment of an audio stream. The method includes receiving at an audio playback device an audio stream from an audio transmission source, the audio stream comprising a plurality of segments; temporarily storing the audio stream in a buffer that contains a contiguous portion of the audio stream from a preceding time period, the buffer residing in memory of the audio playback device; receiving via a user interface of the audio playback device indicia of a selection, the indicia of the selection associated with the segment being currently received from the audio transmission source; and storing the segment associated with the indicia of the selection in memory of the audio playback device.

### BRIEF DESCRIPTION OF THE FIGURES

FIGURE 1 is a block diagram illustrating an environment for preserving segments of audio streams received by an audio playback device from an audio transmission source.

FIGURE 2 is a block diagram of the exemplary audio playback device of FIGURE 1.

FIGURE 3 is a block diagram of an exemplary segment preservation engine that may be included in the audio playback device.

FIGURE 4 is a flowchart illustrating an exemplary method for preserving segments of an audio stream.

### DETAILED DESCRIPTION

Methods and systems for selectively preserving segments of audio streams are provided herewith. The audio streams may be provided by radio, satellite, or Internet broadcasts. While listening to an audio stream, a user may be able to select a segment currently being played. By temporarily storing a recent portion or portions of the audio stream in a buffer, the particular segment selected by the user may be stored in memory for later access. The stored segment may remain in memory until it is erased or overwritten or may be assigned to a playback button to allow the user to listen to the stored segment at any time. The stored segment may have limits as to its transferability to other media. The user may optionally purchase and download commercially available partial or whole copies of the stored segments or acquire the same from some other public source.

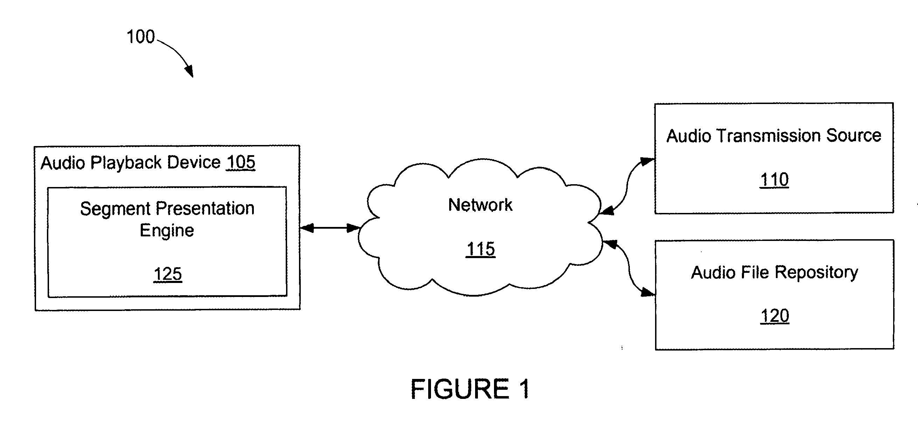

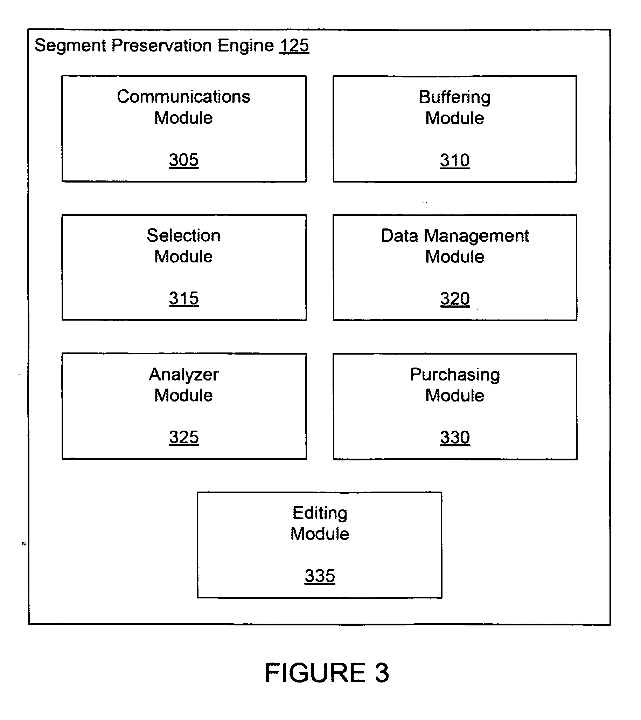

Referring now to FIGURE 1, a block diagram is presented illustrating an environment **100** for preserving segments of audio streams received by an audio playback device **105** from an audio transmission source **110.** The environment **100** of FIGURE 1 includes the audio playback device **105** in communication with the audio transmission source **110** and an audio file repository **120** via a network **115.** Alternatively, the audio file repository **120** may be excluded from the environment **100.** Furthermore, the audio playback device **105** may include a segment preservation engine **125,** which is discussed in further detail in the context of FIGURE 3.

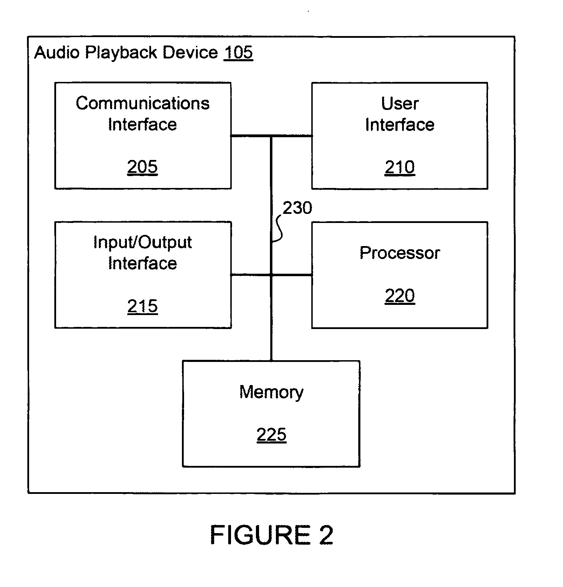

The audio playback device **105** may include any device capable of receiving and playing an audio stream. The audio stream may include any audio data transmission including digital or analog transmissions. The stream may be continuous in nature like that of radio transmissions, satellite transmissions, cellular transmissions, or web-based transmissions. Examples of the audio playback device **105** include those devices equipped with an AM/FM receiver, a satellite receiver, a cellular / general packet radio service (GPRS) receiver, or other input components for receiving audio streams. The audio playback device **105** may be embodied in a car stereo, a portable audio device, or various computing devices. Further details of the audio playback device **105** are discussed in the context of FIGURE 2.

Audio streams may generally include contiguous segments of audio data. These segments may each include a whole or partial song, talk program, commercial, DJ chatter, or news or weather report. The audio stream may be degraded depending on various factors specific to, for example, the network **115** and audio transmission source **110** invoked in the environment **100.** To illustrate, the audio stream may be degraded as a result of third-party voice-over, signal loss, signal compression, static noise, or signal interference. In some instances, the audio stream may be intentionally degraded.

The audio streams may also include information in addition to audio data utilized by the audio playback device **105.** For example, the Radio Data System (RDS) is a communications protocol standard from the European Broadcasting Union for sending small amounts of digital information using conventional frequency modulation (FM) radio broadcasts. The RDS standardizes several types of information to be transmitted with audio data including time, track/artist info, program title, and station identification. The Radio Broadcast Data System (RBDS) is the U.S. version of the RDS. These two standards are nearly identical, with only slight differences, mainly related to numbers assigned to each of thirty one musical and other program formats the RDS and the RBDS can identify. Other information or metadata may also accompany audio information in an audio stream that may be used to accurately mark transitions between songs or programs and DJ or commercial interruptions.

The network **115** may include apparatus configured to facilitate communication between the audio playback device **105** and other elements of the environment **100.** In some examples, the network **115** may include a radio broadcast system. Radio broadcast systems may be composed of one or more transmitting stations that broadcast an audio stream to the audio playback device **105.** The audio stream may be broadcasted at some frequency such as those included in the amplitude modulation (AM) or FM bands. These transmitting stations may be linked by wire or microwave relay so that the same audio stream may be broadcasted by many stations.

The network **115** may also include any number of computers, computer terminals, and routers interconnected by telecommunication equipment or cables used to transmit or receive information. Furthermore, the network **115** may include elements of a satellite-based network or a cellular network. Moreover, a plurality of networks may be simultaneously included in the environment **100.** For example, communication between the audio playback device **105** and the audio transmission source **110** may be facilitated by a radio broadcast system, while communication between the audio playback device **105** and the audio file repository **120** may be facilitated by a Wi-Fi or cellular network.

The audio transmission source **110** may include Internet radio broadcasts, satellite radio broadcasts, AM/FM radio broadcasts, or any other source for streaming or transmitting audio. Internet radio generally describes an audio broadcasting service transmitted via the Internet. Internet radio may sometimes be referred to as web radio, net radio, streaming radio, or e-radio. Satellite radio or subscription radio (SR) is generally understood as a digital radio service transmitted by a communications satellite. One service that provides satellite radio broadcasts is Sirius XM Radio, Inc. of New York City, New York. Traditional or 'terrestrial' radio broadcasts transmit audio information via the FM/AM radio broadcast systems generally described above although such systems have expanded to be inclusive of the likes of high definition radio, which is sometimes referred to as NRSC-5 or NRSC-5B.

In addition to broadcast, the audio transmission source **110** may transmit audio via multicast or unicast to the audio playback device **105.** Multicasting describes simultaneously sending information from a single sender to a select group of receivers over a network such as the network **115.** Unicast describes transmission between a single sender and a single receiver over a network such as the network **115.** Multicast and unicast transmissions generally take place in the context of Internet radio.

The audio file repository **120** may include stored collections of audio files or segments of audio files that may be accessed by the audio playback device **105** or an ancillary device via network **115.** The audio file repository **120** may be a vendor of the audio files. For example, the audio file repository **120** may include the iTunes Store operated by Apple, Inc. of Cupertino, California, or AmazonMP3 operated by Amazon.com, Inc. of Seattle, Washington. Both the iTunes Store and AmazonMP3 are accessible via the Internet. The audio transmission source **110** and the audio file repository **120** may be one and the same.

FIGURE 2 is a block diagram of an exemplary audio playback device like the audio playback device **105** of FIGURE 1. The audio playback device **105** of FIGURE 2 includes a communications interface **205,** a user interface **210,** an input/output interface **215,** a processor **220,** and memory **225.** Any hardware platform suitable for performing the processing described herein may be suitable for use with embodiments of the presently disclosed invention. A bus **230** may provide communication between the communications interface **205,** the user interface **210,** the input/output interface **215,** the processor **220,** and memory **225.**

The communications interface **205** may be configured to provide communication between the audio playback device **105** and both the audio transmission source **110** and the audio file repository **120.** As such, the communications interface **205** may include one or more antennae capable of receiving wireless signals from radio broadcast stations, communications satellites, cellular transmitters, and/or Wi-Fi from Internet broadcasters. Such antennae may also allow signals to be sent from the audio playback device **105** to the audio transmission source **110** or the audio file repository **120.**

The user interface **210** allows a user to interact with the audio playback device **105.** The user interface **210** may include, for example, one or more of a touch screen, a display, a button, or a switch. The user may make selections related to the audio transmission source **110,** the audio file repository **120,** and an audio stream received from the audio transmission source **110** through the user interface **210.**

The input/output interface **215** of FIGURE 2 provides communication between the audio playback device **105** and other digital devices. The input/output interface **215** may provide wired or wireless communication with these other digital devices. In one example, the input/output interface **215** includes a USB interface.

The processor **220** includes a device (or series of devices) that execute instructions to effectuate the functionality described by those instructions. Such instructions may be stored in memory **225.** The processor **220** may include a microprocessor or a central processing unit. Processor **220** may also be an application specific integrated circuit or a 'system on a chip' microcontroller.

The memory **225** may include computer-readable storage media for providing instructions to the processor **220** for execution. Such media can take many forms, including but not limited to, non-volatile and volatile media such as optical or magnetic disks and dynamic memory, respectively. Common forms of computer-readable storage media include a floppy disk, a flexible disk, a hard disk, magnetic tape, any other magnetic medium, a CD-ROM disk, digital video disk (DVD), any other optical medium, RAM, PROM, EPROM, a FLASHEPROM, any other memory chip or cartridge.

The bus **230** may include various forms of transmission media to carry one or more sequences of one or more instructions to the processor **220** for execution. The bus **230** may carry data to the memory **225,** from which the processor **220** retrieves and executes the instructions. The instructions received by the memory **225** can optionally be stored on a fixed disk either before or after execution by the processor **220.**

FIGURE 3 is a block diagram of the exemplary segment preservation engine **125.** The segment preservation engine **125,** as depicted, includes a communications module **305,** a buffering module **310,** a selection module **315,** a data management module **320,** an analyzer module **325,** a purchasing module **330,** and an editing module **335.** The segment preservation engine **125** and its constituent modules may be stored in the memory **225** and executed by the processor **220** to effectuate the functionality corresponding thereto. The segment preservation engine **125** may be composed of more or less modules (or combinations of the same) and still fall within the scope of the present invention. For example, the functionality of the analyzer module **325** and the functionality of the editing module **335** may be combined into a single module.

Through execution of the communications module **305** of FIGURE 3, the audio playback device **105** receives an audio stream from the audio transmission source **110,** which may include a plurality of segments. The segments may each include all or part of a song, talk program, commercial, DJ chatter, news or weather report. Information beyond audio data may also be received with the audio stream such as RDS and RBDS related information, or various metadata. This information may be used by various modules of the segment preservation engine **125** to accurately mark transitions between segments.

This information may also be used to tag the segments with pertinent data such as with an ID3 tag. ID3 describes a metadata container often used in conjunction with the MP3 audio file format that allows information such as title, artist, album, track number, or other information about the file to be stored in the file itself.

Execution of the communications module **305** may further provide communication with the audio file repository **120.** Such communication may be unidirectional or bidirectional. For example, the communications module **305** may be executable by a processor to send a request for, and download, a clean copy of a given segment to the audio playback device **105.** The clean copy of the given segments may be an audio file of the same material as the given segment without, or with less, degradation. To illustrate, the given segment may be a particular song broadcasted by a radio station that is degraded by static. The clean copy of that song or segments thereof may be an MP3 file of a studio recording of that song or segment with little to no degradation.

Execution of the communications module **305** may also provide unidirectional or bidirectional communication with other digital devices (not depicted) as might occur through the input/output interface **215.** These devices may include portable media playback devices. These devices may also include peripheral storage devices such as an external hard drive or a thumb drive. Any of these devices may be communicatively coupled, either wirelessly or wired, to the audio playback device **105** via the input/output interface **215.** The audio playback device **105** may read or download audio files from these other digital devices.

Execution of the buffering module **310** of FIGURE 3 allows the audio stream to be temporarily stored in a buffer. The buffer may contain a contiguous portion of the audio stream from a preceding time period. For example, the buffer may contain the last ten minutes of the audio stream received by from the audio transmission source **110.** The buffer may reside in the memory **225** of the audio playback device **105.** The buffer may occasionally be flushed such as when power to the audio playback device **105** is lost or there is a change in audio transmission source **110** (*e.g*., changing stations).

Execution of the selection module **315** of FIGURE 3 provides for indicia of a selection to be received via the user interface **210** of the audio playback device **105**. The indicia of the selection may be associated with the segment currently being received from the audio transmission source **110.** For example, a user may be listening to a segment of the audio stream being played on the audio playback device **105** and make a selection indicative of that segment. The selection by the user may be made in various ways such as by pressing and holding a button on the user interface **210**, much like radio station presets are often selected.

The data management module **320** of FIGURE 3 is executable to provide management of data stored in the memory **225** of the audio playback device **105.** For example, execution of the data management module **320** may allow the segments associated with the indicia of the selection to be stored in the memory **225** of the audio playback device **105.** The stored segments may remain in the memory **225** until erased or overwritten. Additionally, a total number of stored segments may be limited. Storage of the segments may be aided by execution of the analyzer module **325** as described further. Execution of the data management module **320** may also allow information to be associated with the stored segments. This information may include an artist name or a song title, or other information beyond audio data received by execution of the communications module **305.**

The data management module **320** may be further executed to manage a playlist stored in the memory **225** of the audio playback device **105.** Such a playlist may include the stored segments from the received audio stream and/or audio files received from the audio file repository **120** or other digital playback and storage devices communicatively coupled to the audio playback device **105.** The user may access and manipulate the playlist using the user interface **210** of the audio playback device **105.**

Execution of the analyzer module **325** allows the buffer to be analyzed to determine the beginning and the end of the segment associated with the indicia of the selection by the user. Determination of the beginning and the end of a segment in the buffer may allow that segment to be accurately identified and stored in the memory **225** of the audio playback device **105** without extraneous audio information such as DJ chatter and commercials.

Through execution of the purchasing module **330,** a user may purchase at least a portion of a clean copy of the segment associated with the indicia of the selection. The purchasing module **330** may use information associated with a given segment such as an artist name or track title to identify that segment for purchase. The purchased clean copy may be downloaded from the audio file repository **120** by execution of the communications module **105** and stored in the memory **225.** The user may have an account with the audio file repository **330** or other entity to handle any monetary exchange.

Execution of the editing module **335** of FIGURE 3 allows the stored segments to be edited in various manners. For example, at least a portion of a given stored segment may be replaced with a corresponding portion of a clean copy. This may be performed when a portion of the stored segment is damaged or obscured by DJ chatter or the like. The editing module **335** may also intentionally degrade the stored segment. Furthermore, the editing module **335** may apply a digital rights management wrapper to the stored selected segment.

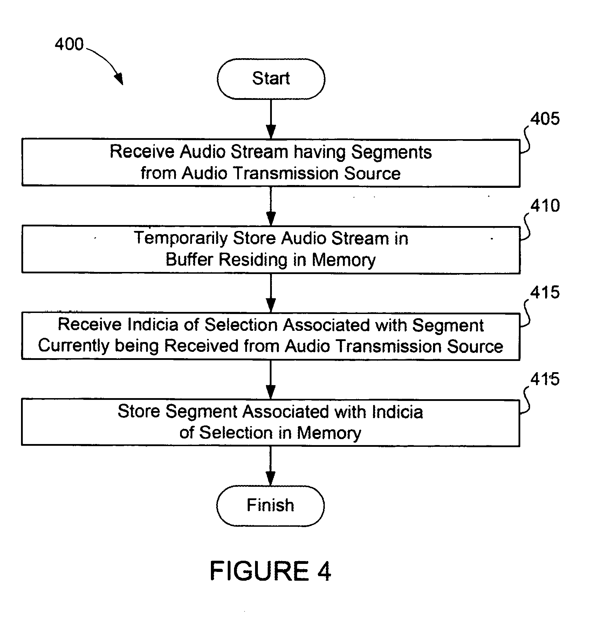

FIGURE 4 is a flowchart illustrating an exemplary method **400** for preserving segments of an audio stream. The steps of the method **400** may be performed in varying orders. Steps may be added or subtracted from the method **400** and still fall within the scope of the present invention. The steps of FIGURE 4 may also be embodied in instructions stored in a computer-readable storage medium, those instructions being executable by a processor.

In step **405,** an audio stream is received by the audio playback device 105 from the audio transmission source **110.** The audio stream may include a plurality of segments. Step **405** may be performed though execution of the communication module 305 by processor **220.**

In step **410,** the audio stream is temporarily stored in a buffer residing in the memory **425** of the audio playback device **105.** The buffer may contain a contiguous portion of the audio stream from a preceding time period. For example, the buffer may contain that last fifteen minutes of the audio stream received by the audio playback device **105.** Step **410** may be performed through execution of the buffering module **310** by the processor **220.**

In step **415,** indicia of a selection may be received via the user interface **210** of the audio playback device **105.** The indicia of the selection may be associated with the segment being currently received from the audio transmission source **110.** In one example, the user may press and hold a button on the user interface **210** to indicate a selection of the currently played segment of the audio stream. Step **415** may be performed through execution of the selection module **315** by processor **220.**

In step **420,** the segment associated with the indicia of the selection may be stored in the memory **425** of the audio playback device **105.** The stored selection may be available to the user to play at a later time. The stored segment, in some instances, may not be transferred to other digital devices. Step **420** may be performed through execution of the data management module **320** by processor **220.**

While various embodiments have been described above, it should be understood that they have been presented by way of example only, and not limitation. The descriptions are not intended to limit the scope of the invention to the particular forms set forth herein. Thus, the breadth and scope of a preferred embodiment should not be limited by any of the above-described exemplary embodiments.

It should be understood that the above description is illustrative and not restrictive. To the contrary, the present descriptions are intended to cover such alternatives, modifications, and equivalents as may be included within the spirit and scope of the invention as defined by the appended claims and otherwise appreciated by one of ordinary skill in the art. The scope of the invention should, therefore, be determined not with reference to the above description, but instead should be determined with reference to the appended claims along with their full scope of equivalents.

## Claims

1. A method for preserving the integrity of a segment of an audio stream, the method comprising:
receiving an audio stream at an audio playback device, the audio stream received from an audio transmission source, the audio stream comprising a plurality of segments;
temporarily storing the audio stream in a buffer that contains a contiguous portion of the audio stream from a preceding time period, the buffer residing in memory of the audio playback device;
receiving indicia of a selection through a user interface at the audio playback device, the indicia of the selection associated with the segment currently being received from the audio transmission source; and
storing the segment associated with the indicia of the selection in memory of the audio playback device.

2. The method of claim 1, wherein one or more of the plurality of segments includes a song.

3. The method of claim 1 or 2, further comprising:
analyzing the buffer to determine the beginning and the end of the segment associated with the indicia of the selection, wherein the storing of the segment associated with the indicia of the selection is based in part on a determination of the beginning and the end of the segment associated with the indicia of the selection.

4. The method of any of claims 1-3, further comprising:
receiving information about the segment associated with the indicia of the selection, the information including one or more of an artist name or a song title; and
associating the information with the stored segment.

5. The method of any preceding claim, further comprising:
replacing at least a portion of a the stored segment associated with the indicia of the selection with a subsequently acquired portion of the segment associated with the indicia of the selection.

6. The method of claim 5, wherein the subsequently acquired portion is a downloaded clean copy and/or wherein the subsequently acquired portion of the segment is purchased.

7. The method of any preceding claim, further comprising:
degrading the stored segment.

8. The method of any preceding claim, further comprising:
applying a digital rights management wrapper to the stored segment.

9. The method of any preceding claim, wherein the stored segment is non-transferrable.

10. The method of any preceding claim, wherein the audio stream is degraded as a result of one or more of third-party voice-over, signal loss, signal compression, static noise, or signal interference.

11. A system for preserving the integrity of a segment of an audio stream, the system comprising:
a communications module stored in memory and executable by a processor to receive an audio stream from an audio transmission source, the audio stream comprising a plurality of segments;
a buffering module stored in memory and executable by a processor to temporarily store the audio stream in a buffer that contains a contiguous portion of the audio stream from a preceding time period, the buffer residing in memory of the audio playback device;
a selection module stored in memory and executable by a processor to receive via a user interface of the audio playback device indicia of a selection, the indicia of the selection associated with the segment being currently received from the audio transmission source; and
a data management module stored in memory and executable by a processor to store the segment associated with the indicia of the selection in memory of the audio playback device.

12. The system of claim 11, further comprising:
an analyzer module stored in memory and executable by a processor to analyze the buffer to determine the beginning and the end of the segment associated with the indicia of the selection, wherein storing the segment associated with the indicia of the selection in response to execution of the data management module is based in part on a determination of the beginning and the end of the segment associated with the indicia of the selection.

13. The system of claim 11 or 12, wherein the data management module is further executable by a processor to associate information with the stored segment, the information including one or more of an artist name or a song title.

14. The system of any of claims 11-13, further comprising:
a purchasing module stored in memory and executable by a processor to receive a request to purchase a clean copy of at least a portion of the segment associated with the indicia of the selection.

15. The system of claim 14, wherein the communications module is further executable by a processor to download the clean copy.

16. The system of claim 14, further comprising:
an editing module stored in memory and executable by a processor to replace at least a portion of the stored segment with the clean copy.

17. The system of any of claims 11-16, further comprising:
an editing module stored in memory and executable by a processor to degrade the stored segment.

18. The system of any of claims 11-17, further comprising:
an editing module stored in memory and executable by a processor to apply a digital rights management wrapper to the stored segment.

19. A computer readable storage medium having a program embodied thereon, the program executable by a processor to perform a method for preserving the integrity of a segment of an audio stream according to any of claims 1-10.
